Europäisches Patentamt

European Patent Office

Office européen des brevets

(19)

(11) Veröffentlichungsnummer : **0 390 830 B1**

(12) **EUROPÄISCHE PATENTSCHRIFT**

(45) Veröffentlichungstag der Patentschrift :
**09.09.92 Patentblatt 92/37**

(51) Int. Cl.$^5$ : **A62D 3/00**

(21) Anmeldenummer : **89900238.0**

(22) Anmeldetag : **13.12.88**

(86) Internationale Anmeldenummer :
**PCT/EP88/01148**

(87) Internationale Veröffentlichungsnummer :
**WO 89/05674 29.06.89 Gazette 89/14**

(54) **VERFAHREN ZUR ENTFERNUNG UND ZUR QUALITATIV-ANALYTISCHEN BESTIMMUNG VON ZYANID IN VERUNREINIGTEN BÖDEN.**

(30) Priorität : **18.12.87 DE 3742948**

(43) Veröffentlichungstag der Anmeldung :
**10.10.90 Patentblatt 90/41**

(45) Bekanntmachung des Hinweises auf die
Patenterteilung :
**09.09.92 Patentblatt 92/37**

(84) Benannte Vertragsstaaten :
**AT BE CH FR GB IT LI LU NL SE**

(56) Entgegenhaltungen :
**EP-A- 0 161 698**
**DD-B- 142 329**
**DE-A- 2 141 294**
**DE-A- 2 439 189**
**DE-A- 2 447 221**
**DE-A- 2 531 720**
**DE-A- 2 709 722**

(56) Entgegenhaltungen :
**Chemical Abstracts, volume 88, Nr.16,17 April
1978, (Columbus, Ohio, US), Sohn, Byung
Chan et al. : "A study on the recoveryof
cyanide from cyanide wastes", see page 300,
abstract 110057y**

(73) Patentinhaber : **Gerling Consulting Gruppe
Institute Für Risiko-Consulting Plus
Sicherheits-Management GmbH
Postfach 10 08 08
W-5000 Köln 1 (DE)**

(72) Erfinder : **WAHL, Rudolf
Kaltentaler Strasse 19
W-7000 Stuttgart 80 (DE)**
Erfinder : **BORCHARDT, Ulrich
Buchenweg 3F
W-5200 Siegburg (DE)**

(74) Vertreter : **Werner, Hans-Karsten, Dr. et al
Deichmannhaus am Hauptbahnhof
W-5000 Köln 1 (DE)**

**Beschreibung**

Gegenstand der vorliegenden Erfindung ist ein Verfahren zur Entfernung von Cyanid in mit Cyanid verunreinigten Böden sowie eine auf dem gleichen Verfahren basierende qualitativ-analytische Bestimmung von Cyanid in potentiell oder tatsächlich mit Cyanid verunreinigten Böden.

Im Zuge der Aufdeckung von kontaminierten Standorten, zum Beispiel durch die Erstellung von Altlastkatastern, aber auch bei neu auftretenden Kontaminationen des Bodens bei Betriebsunfällen, stößt man in zunehmendem Maße auch auf mit Cyanid verunreinigte Böden. In erster Linie stammen diese Kontaminationen aus Galvanikbetrieben, jedoch tritt dieses Problem auch überall dort auf, wo mit größeren Mengen Cyanid gearbeitet wird oder gearbeitet wurde.

Bisher wurde das Problem dadurch gelöst, daß derartige Böden ausgebaggert und auf Giftmülldeponien verbracht wurden. Dieses Verfahren ist außerordentlich teuer und in zunehmendem Maße schwierig durchführbar, da der Raum in Giftmülldeponien äußerst beschränkt ist und in Zukunft immer weniger zur Verfügung stehen wird. Besonders problematisch und kostspielig wird dieses Problem, wenn es sich um Boden handelt, der unterhalb oder unmittelbar angrenzend an Gebäuden liegt, da das Ausbaggern die Standsicherheit der Gebäude gefährden kann. In Extremfällen mußte daher bisher sogar an den Abriß der Gebäude gedacht werden.

Es bestand somit zunächst die Aufgabe, ein Verfahren zu entwickeln, mit dem das Cyanid aus verunreinigten Böden entfernt werden konnte, wobei bereits eine Beseitigung on-site oder off-site wertvolle Dienste leisten könnte, um eine Verbringung auf die Giftmülldeponie zu vermeiden. Vorzugsweise sollte das Verfahren aber auch in-situ durchführbar sein, um die Kosten des Ausbaggerns und die statische Gefährdung von anliegenden Gebäuden zu vermeiden.

Es ist bekannt, cyanidische Abwässer nach verschiedenen Methoden zu entgiften, wobei jedoch stets in relativ konzentrierten Lösungen gearbeitet wird und die Verfahren in mehr oder weniger geschlossenen Behältern durchgeführt werden können. So ist beispielsweise die Entgiftung mit Hypochlorit bekannt, bei der in exothermer Reaktion zunächst das ebenfalls giftige Chlorcyan entsteht, welches bei pH-Werten über 12 hydrolisiert werden kann und in Cyanat bzw. schließlich Ammoncarbonat überführt werden kann. problematisch ist dieses Verfahren obendrein, wenn im Abwasser nicht nur freie Alkalicyanide, sondern auch Schwermetallcyanid-Komplexe vorliegen, da diese die Umsetzung des Cyanids verhindern oder zumindest stark verzögern. Weiterhin bekannt ist die Entgiftung mit perchemikalien, insbesondere mit Caro'scher Säure oder $H_2O_2$. Diese Verfahren sind besonders gut geeignet für relativ konzentrierte Cyanidlösungen. Da die Reaktion mit Wasserstoffperoxid bei Raumtemperatur nur sehr langsam verläuft, muß daher entweder bei erhöhter Temperatur oder mit Katalysatoren gearbeitet werden. Als Katalysatoren werden insbesondere Kupfersalze in Mengen von 0,2 g Kupfersulfat/Liter zugegeben.

In zwei weiteren Verfahren wird Formaldehyd und $H_2O_2$ oder Ozon eingeleitet. Beide Verfahren arbeiten nur bei relativ hohen Konzentrationen, sind relativ kostspielig und wegen der Toxizität der Chemikalien ebenfalls nicht unproblematisch.

Ein weiteres bekanntes Verfahren ist die Oxidation mit Luftsauerstoff im sogenannten Carbocyanverfahren. Hierbei wird die Cyanidlösung über eine mit bestimmten aktiven Kohlesorten gefüllte Kolonne geleitet und gleichzeitig Luft eingeblasen. Bei diesem Verfahren wird ein Teil des Cyanids umgesetzt zu Cyanat und ein Teil zu Stickstoff. Das Cyanat kann später in Ammoniak und Kohlensäure verseift werden. Diese katalytische Oxidation gelingt bei Nickel-Komplexen unvollständig und bei Eisen-Komplexen überhaupt nicht.

Bekannt ist auch die Oxidation von Blausäure in der Gasphase, insbesondere bei hochkonzentrierten Cyanidlösungen. Dabei wird die konzentrierte Cyanidlösung mit starken Säuren - gegebenenfalls auch Abfallsäurenumgesetzt. Die freigesetzte Blausäure wird anschließend mit einem Trägergas aus der Lösung ausgetrieben und der Oxidation zugeführt. Dieses Verfahren kann nur in einem absolut abgeschlossenen System und unter größten Vorsichtsmaßnahmen durchgeführt werden. Es hat sich in der Praxis bisher nicht bewährt.

Die Hydrolyse von Cyaniden ist bereits katalytisch durchgeführt worden, indem man das Gemisch von Blausäure und Luft über einen Edelmetallkontakt leitet, an dem die Verbrennung der Blausäure zu Kohlendioxidstickstoff und Wasser erfolgt. Bei Sauerstoffunterschuß entsteht auch Kohlenmonoxid, Stickstoff und Wasser. Die Verbrennungswärme dieses Verfahrens kann gleichzeitig zum Erhitzen der zu entgiftenden Lösung verwendet werden. Dieses Verfahren ist sicherlich auch nicht für die Entgiftung von kontaminierten Böden geeignet. Auch die Hydrolyse von Cyaniden im Autoklaven bei Temperaturen von 180 bis 200°C zur Beseitigung von Härterei-Altsalzen ist für die Entgiftung von Böden kaum durchführbar.

Die Entfernung von Cyaniden durch Fällung als Berliner Weiß oder Berliner Blau macht es erforderlich, die Fällungsprodukte auf einer Sondermülldeponie zu lagern oder einer Fachfirma die Aufarbeitung zu übergeben. Auch diese Verfahren sind somit sicherlich nicht geeignet, mit Cyanid verunreinigte Böden aufzuarbeiten. Eine Zusammenstellung all dieser Techniken findet sich in den Firmenschriften der Firma Degussa, "CYANIDE, Entgiftung cyanidischer Abwässer - eine Übersicht über gängige Verfahren" sowie "CYANIDE, Entgiftung cyanidischer Abwässer mit Persauerstoff-Verbindungen".

Es wurde jetzt überraschenderweise gefunden, daß es möglich ist, mit Cyanid verunreinigte Böden dadurch zu entgiften, daß unter Durchblasen eines Gasstromes biologisch abbaubare, organische Säuren und/oder Kohlensäure in den Boden eingeleitet und die dabei freigesetzte Blausäure unmittelbar anschließend oxidiert wird, bis in dem austretenden Gasstrom keine Blausäure und kein Ammoniak mehr nachweisbar sind. Das Cyanid liegt insbesondere in wasserlöslicher, freier oder schwach komplexgebundener Form vor.

Als biologisch abbaubare, organische Säuren kommen insbesondere Ameisensäure und Essigsäure in Frage. Besonders bevorzugt ist jedoch Kohlensäure, da sie praktisch zu keiner auch nur vorübergehenden Kontamination des Bodens führt. Weiterhin ist Kohlensäure besonders preiswert und bei dem Verfahren technisch besonders einfach handhabbar.

Als Gasstrom kommen prinzipiell alle in ausreichender Menge und preiswert zur Verfügung stehenden Gase in Frage wie Kohlendioxid, Stickstoff, Wasserdampf, Sauerstoff oder Preßluft. Erstaunlicherweise wirkt Preßluft bereits gleichzeitig als Oxidationsmittel, so daß nach dem Einleiten der organischen Säure und/oder Kohlensäure und Durchblasen von Preßluft die Blausäure in zunehmendem Maße bereits aufoxidiert wird und das austretende Gas nur noch Ammoniak enthält.

Bei der besonders bevorzugten Ausführungsform des erfindungsgemäßen Verfahrens werden gleichzeitig oder abwechselnd Preßluft und Kohlendioxid in den Boden eingeleitet. Der austretende Gasstrom enthält dann nur anfangs noch etwas Blausäure und nach einer Induktionsphase nur noch Ammoniak, bis schließlich auch Ammoniak unter die Nachweisgrenze absinkt. Restlicher im Bodenkörper verbleibender Ammoniak ist aus ökologischer Sicht unbedenklich.

Um insbesondere das Problem der anfangs austretenden Blausäure zu lösen, ist es erfindungsgemäß möglich, den austretenden Gasstrom aufzufangen und so lange erneut in den Boden einzuleiten, bis keine Blausäure mehr nachweisbar ist.

Der Nachweis von Blausäure und/oder Ammoniak in dem austretenden Gasstrom kann beispielsweise mit Hilfe der Indikatorröhrchen der Firma DRÄGER erfolgen, die in der Lage sind, Verunreinigungen von Blausäure und Ammoniak in dem austretenden Gasstrom mit ausreichender Genauigkeit festzustellen.

Ein besonderer Vorteil des erfindungsgemäßen Verfahrens ist, daß es nicht nur zur Behandlung des ausgebaggerten Materials im sogenannten on-site- oder off-site-Verfahren geeignet ist, sondern auch in-situ durchführbar ist, das heißt ohne zuvoriges Ausbaggern des verunreinigten Bodenmaterials.

Gleichzeitig ermöglicht das erfindungsgemäße Verfahren, Cyanid qualitativ-analytisch in verunreinigten Böden aufzuspüren. Dazu wird zum Beispiel über ein rasterförmig bzw. lokal orientiertes Entnahmesystem, Be- oder Entlüftungssystem, wie ein Lanzen- oder Drainagesystem, in die potentiell oder tatsächlich verunreinigte Bodenprobe unter Durchblasen eines Gasstromes biologisch abbaubare, organische Säure und/oder Kohlensäure eingeleitet und die dabei freigesetzte Blausäure unmittelbar anschließend oxidiert und in dem austretenden Gasstrom als Blausäure und/oder Ammoniak nachgewiesen. Wird das Verfahren zur Erkennung von cyanidhaltigen Bodenkörpern eingesetzt, ist es hinreichend, den Boden im Bereich der vermuteten Kontamination mit der biologisch abbaubaren, organischen Säure und/oder Kohlensäure unter oxidativen Bedingungen anzureichern, bis hin zur Sättigung. Dann wird in einer gezogenen Probe das Cyanid als Blausäure und/oder Ammoniak nachgewiesen. Sofern der austretende Gasstrom weder Blausäure noch Ammoniak enthält, kann davon ausgegangen werden, daß dieser Bereich nicht mit wasserlöslichem oder nur schwach komplex gebundenem Cyanid verunreinigt ist. Dieses Nachweisverfahren bedingt ebenfalls einen indirekten Nachweis von den mit den jeweiligen cyanidhaltigen Infiltrationen vergesellschafteten Schadstoffen. Stammen beispielsweise die Verunreinigungen aus galvanischen Betrieben, insbesondere aus Spül- oder Abwässern, ist auch davon auszugehen, daß Schwermetallinfiltrationen stattgefunden haben können.

Das erfindungsgemäße Verfahren ist prinzipiell bei allen Böden durchführbar, die eine ausreichende Wasser- und Gasdurchlässigkeit aufweisen. Böden mit geringer Wasser- und Gasdurchlässigkeit sind aber auch meistens wesentlich weniger gefährdet, durch Cyanidlaugen verunreinigt zu werden. Böden mit einem Wasserdurchlässigkeitsbeiwert von $10^{-5}$ bis $10^{-6}$ können jedenfalls erfindungsgemäß noch gereinigt und analytisch untersucht werden.

Sofern mit Cyanid verunreinigte Böden unter den erfindungsgemäßen Bedingungen weder Blausäure noch Ammoniak abgeben, ist davon auszugehen, daß das Cyanid in ihnen so fest gebunden ist, daß es auch keine Gefährdung für Grundwasser und sonstige Umwelt darstellt. Abschließende Untersuchungen hierüber liegen jedoch noch nicht vor. Weiterhin ungeklärt ist bisher, ob alle mit Cyanid verunreinigten Böden in der Lage sind, unter den erfindungsgemäßen Bedingungen die Blausäure vollständig zu oxidieren und das dabei entstehende Cyanat zu hydrolysieren, so daß schließlich nur noch Ammoniak analytisch nachweisbar bleibt. Gegebenenfalls könnte in derartige Böden zusätzlich eine ausreichende Katalysatormenge von Metallsalzen eingeleitet werden, beispielsweise Eisen- oder Kupfersalze, die jedoch normalerweise in derartig verunreinigten Böden in ausreichender Menge vorhanden sind. In allen bisher durchgeführten Fällen war jedenfalls ein

EP 0 390 830 B1

derartiger Zusatz nicht notwendig, sondern wurde nach einer kurzen Induktionsphase im austretenden Gasstrom keine Blausäure, sondern nur noch Ammoniak festgestellt.

In den nachfolgenden Beispielen sind typische Ausführungsformen des erfindungsgemäßen Verfahren näher erläutert:

### Beispiel 1

Aus einem Galvanikbetrieb waren verbrauchte, cyanidhaltige Kupferbäder über eine defekte Rohrleitung in den Boden eingedrungen. Zur Behebung dieses Schadens war zunächst das Erdreich außerhalb des Gebäudes so weit abgebaggert worden, daß keine Gefährdung der Statik des Gebäudes eintrat. Das ausgebaggerte Material befand sich in Containern und sollte auf eine geeignete Giftmülldeponie verbracht werden. Die Konzentration an Gesamtcyanid in dem Boden betrug 103 mg/kg Boden. Ein an dieser Bodenprobe durchgeführter Eluatversuch gemäß deutschem Einheitsverfahren, Kapitel S 4 führte zu einem Gehalt an freiem Cyanid von ca. 80 mg/kg Boden. Der Aushub betrug insgesamt 70 m$^3$ Erdreich, von denen ca. 6 m$^3$ Beton- und Mauerreste waren, die ebenfalls mit cyanidhaltigen Lösungen stark verunreinigt waren und daher schon Kupferausblühungen rein optisch erkennen ließen. Der Boden war überwiegend sandig (Mittelsand nach DIN 4022) und daher besonders kritisch bezüglich Auslaugung und Vergiftung des Grundwassers. Da noch keine geeignete Giftmülldeponie gefunden worden war, wurde versucht, das ausgehobene Erdreich in den Containern zu sanieren.

Durch am Boden der Container verlegte Drainagerohre sowie später durch das Einschlagen von Rammsonden und Rammlanzen war es möglich, verschiedene Flüssigkeiten und Gase einzuleiten. Dabei wurde überraschenderweise festgestellt, daß nach dem Einbringen ausreichender Mengen von Essigsäure oder Kohlensäure und Durchblasen eines Luftstromes nur anfangs etwas Blausäure (maximal 5 ppm im freien Luftraum des abgedeckten Containers) austrat und nach einiger Zeit der Gehalt an Blausäure absank und statt dessen in erhöhtem Maße Ammoniak (maximal 100 ppm im freien Luftraum des abgedeckten Containers) austrat. Die Blausäure war somit offensichtlich durch den Luftsauerstoff oxidiert und das dabei entstandene Cyanat anschließend hydrolysiert worden. Anscheinend haben die große Oberfläche des ausgebaggerten Bodens und die darin vorhandenen Verunreinigungen und Bestandteile katalytisch die Umsetzung zum Ammoniak durchgeführt. Nach den Kenntnissen über die Entgiftung von cyanidhaltigen Abwässern war zu erwarten gewesen, daß derartige Reaktionen erst bei wesentlich höheren Konzentrationen und bei höheren Temperaturen eintreten sollten. Die weiteren Versuche an den Containern haben dann gezeigt, daß durch intermittierendes Durchblasen von Kohlensäure und Preßluft in den verunreinigten Boden bereits nach einigen Tagen der Gehalt an Blausäure und Ammoniak in dem austretenden Gasstrom unterhalb der Nachweisgrenze mit Drägerröhrchen lag. Weitere analytische Untersuchungen des so behandelten Bodens zeigten, daß der Gehalt an Gesamtcyanid und an eluierbarem Cyanid unterhalb des ursprünglichen Wertes abgesunken war.

### Beispiel 2

Nach den erfolgversprechenden Ergebnissen im on-site-Verfahren gemäß Beispiel 1 wurde das restliche verbleibende Bodenmaterial unterhalb und unmittelbar angrenzend an dem Gebäude in situ behandelt. Dazu wurden intermittierend Kohlensäure und Preßluft in eingetriebene Spüllanzen eingeblasen und das austretende Gas mit einer Absaugung analog der Bodenentgasung bei halogenierten Kohlenwasserstoffen entfernt. Nach einigen Tagen enthielt der austretende Gasstrom keine nachweisbaren Mengen an Blausäure und Ammoniak mehr (Nachweisgrenze mit Drägerröhrchen: jeweils 0,5 ppm Blausäure bzw. Ammoniak). Mittels Sonden entnommene Bodenproben in der Mitte zwischen je zwei Einleitungsstellen zeigten, daß die Mengen an Gesamtcyanid und auslaugbarem Cyanid unterhalb der zulässigen Grenzwerte lagen.

### Beispiel 3

Im weiteren Umfeld des mit Cyanid verunreinigten Bodengebietes wurden weitere Lanzen eingetrieben und intermittierend Kohlendioxid und Preßluft durchgeblasen. Die Analyse des austretenden Gases zeigte, daß nur dort noch Blausäure und Ammoniak nachweisbar waren, wo die direkte Analyse von Bodenproben ebenfalls eine Verunreinigung mit Cyaniden ergeben hatte. Das Verfahren zur Entfernung von Cyanid kann somit auch zur qualitativanalytischen Bestimmung verwendet werden.

4

**Patentansprüche**

1. Verfahren zur Entfernung und zur qualitativ-analytischen Bestimmung von Cyanid in mit Cyanid verunreinigten Böden, dadurch gekennzeichnet, daß unter Durchblasen eines Gasstromes biologisch abbaubare, organische Säuren und/oder Kohlensäure in den Boden eingeleitet und die dabei freigesetzte Blausäure unmittelbar anschließend oxidiert wird, bis in dem austretenden Gasstrom keine Blausäure und kein Ammoniak mehr nachweisbar sind.

2. Verfahren gemäß Anspruch 1, dadurch gekennzeichnet, daß als Gasstrom und Oxidationsmittel Preßluft verwendet wird.

3. Verfahren gemäß einem der Ansprüche 1 oder 2, dadurch gekennzeichnet, daß es in situ, on-site oder off-site durchgeführt wird.

4. Verfahren gemäß einem der Ansprüche 1 bis 3, dadurch gekennzeichnet, daß der austretende Gasstrom aufgefangen und so lange erneut in den Boden eingeleitet wird, bis keine Blausäure und/oder kein Ammoniak mehr nachweisbar sind/ist.

5. Verfahren nach einem der Ansprüche 1 bis 4, dadurch gekennzeichnet, daß durch die freigesetzte Blausäure und/oder Ammoniak die Anwesenheit von durch schwache Säuren freisetzbaren, wasserlöslichen, freien oder schwach komplexgebundenen Cyaniden in damit verunreinigten Böden nachgewiesen wird.

6. Verfahren nach einem der Ansprüche 1 bis 5, dadurch gekennzeichnet, daß Cyanide mittels eines rasterförmigen Be- oder Entlüftungssystems oder Entnahmesystems als Blausäure und/oder Ammoniak nachgewiesen werden.

7. Verfahren gemäß einem der Ansprüche 1 bis 6, dadurch gekennzeichnet, daß mit Cyaniden vergesellschaftete Kontaminationen indirekt erfaßt werden.

8. Verfahren nach Anspruch 7, dadurch gekennzeichnet, daß die mit Cyanid vergesellschafteten Kontaminationen Schwermetalle sind.

**Claims**

1. A process for the removal and qualitative analytical determination of cyanide in cyanide-contaminated soils, characterized in that biologically degradable organic acids are introduced into the soil while blowing a gas stream therethrough, and subsequently the hydrocyanic acid deliberated thereby is oxidized, until no hydrocyanic acid and no ammonia are detectable any more in the emerging gas stream.

2. The process according to claim 1, characterized in that compressed air is used as the gas stream and oxidizing agent.

3. The process according to anyone of claims 1 or 2, characterized in that said process is carried out in situ, on-site or off-site.

4. The process according to anyone of claims 1 to 3, characterized in that the emerging gas stream is collected and re-introduced into the soil until no hydrocyanic acid and/or no ammonia is/are any more detectable.

5. The process according to anyone of claims 1 to 4, characterized in that the presence of free or weakly complexed cyanides capable of being released with weak acids is detected by means of the hydrocyanic acid and/or ammonia liberated.

6. The process according to anyone of claims 1 to 5, characterized in that cyanides are detected as hydrocyanic acid and/or ammonia by means of a screen or raster-shaped aerating or venting system or withdrawal system.

7. The process according to anyone of claims 1 to 6, characterized in that pollutants associated with cyanides are indirectly detected.

8. The process according to claim 7, characterized in that the pollutants associated with cyanides are heavy metals.

## Revendications

1. Procédé pour éliminer et pour déterminer par analyse qualitative un cyanure dans des sols contaminés par celui-ci,
   caractérisé en ce qu'on introduit dans le sol, par insufflation d'un courant gazeux, des acides organiques biodégradables et/ou du gaz carbonique, et on oxyde immédiatement après l'acide cyanhydrique ainsi libéré, jusqu'à ce qu'on ne puisse plus détecter d'acide cyanhydrique ni d'ammoniac dans le courant de gaz sortant.

2. Procédé selon la revendication 1, caractérisé en ce qu'on utilise de l'air comprimé pour constituer le courant gazeux et le moyen d'oxydation.

3. Procédé selon l'une des revendications 1 ou 2, caractérisé en ce qu'il est mis en oeuvre in situ, sur le site ou hors du site.

4. Procédé selon l'une des revendications 1 à 3, caractérisé en ce que le courant gazeux sortant est récupéré et introduit à nouveau dans le sol jusqu'à ce qu'on ne puisse plus y détecter d'acide cyanhydrique et/ou d'ammoniac.

5. Procédé selon l'une des revendications 1 à 4, caractérisé en ce q'on détecte, par l'acide cyanhydrique ou l'ammoniac libérés, la présence de cyanures déplaçables par des acides faibles, solubles dans l'eau, libres ou faiblement complexés, qui se trouvent dans des sols qu'il contaminent.

6. Procédé selon l'une des revendications 1 à 5, caractérisé en ce qu'on détecte des cyanures, sous forme d'acide cyanhydrique ou d'ammoniac à l'aide d'un système étagé de ventilation ou dégazage, ou d'un système d'extraction.

7. Procédé selon l'une des revendications 1 à 6, caractérisé en ce qu'on détecte indirectement des contaminations associées aux cyanures.

8. Procédé selon la revendication 7, caractérisé en ce que les contaminations associées aux cyanures comportent des métaux lourds.